(19) Europäisches Patentamt
European Patent Office
Office européen des brevets

(11) EP 4 708 396 A1

(12) EUROPEAN PATENT APPLICATION

(43) Date of publication:
**11.03.2026 Bulletin 2026/11**

(21) Application number: **25197825.0**

(22) Date of filing: **25.08.2025**

(51) International Patent Classification (IPC):
***H01M 4/38*** (2006.01) ***H01M 4/40*** (2006.01)
***H01M 10/052*** (2010.01) ***H01M 10/056*** (2010.01)
***H01M 10/0562*** (2010.01) ***H01M 10/0565*** (2010.01)

(52) Cooperative Patent Classification (CPC):
**H01M 10/0565; H01M 4/382; H01M 4/405; H01M 10/052; H01M 10/056; H01M 10/0562;** H01M 2300/0082; H01M 2300/0091

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.08.2024 JP 2024148210**

(71) Applicant: **TOYOTA JIDOSHA KABUSHIKI KAISHA**
**Toyota-shi, Aichi-ken 471-8571 (JP)**

(72) Inventor: **NAKANISHI, Azusa**
**Toyota-shi, Aichi-ken, 471-8571 (JP)**

(74) Representative: **TBK**
**Bavariaring 4-6**
**80336 München (DE)**

# (54) SOLID ELECTROLYTE MATERIAL AND BATTERY

(57) A solid electrolyte material (3) configured to suppress a decrease in ion conductivity, the solid electrolyte material comprising a polymer electrolyte, an inorganic filler and succinonitrile, the polymer electrolyte comprises an anionic polymer.

FIG. 1

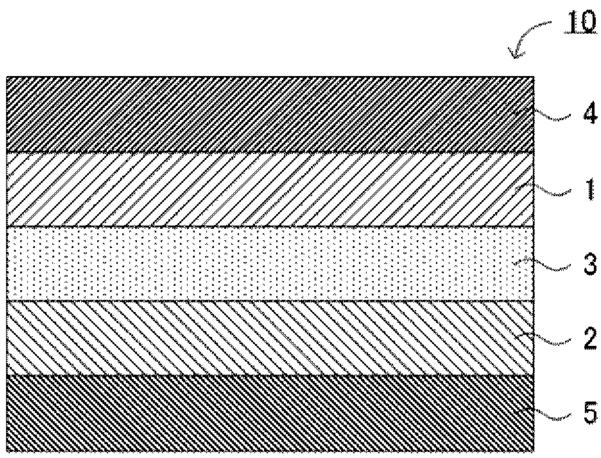


EP 4 708 396 A1

## Description

TECHNICAL FIELD

The disclosure relates to a solid electrolyte material and a battery.

BACKGROUND

Various studies have been proposed for a solid electrolyte material as disclosed in Patent Document 1.

Patent Document 1: Japanese Patent Application Laid-Open (JP-A) No. 2017-091813
Patent Document 2: International Publication No. WO2021/166975
Patent Document 3: International Publication No. WO2022/102767

Patent Document 1 discloses a solid electrolyte in which a plastic crystal is used to improve the ion conductivity of the solid electrolyte and which is capable of exhibiting high ion conductivity even in a low temperature range that is an issue for plastic crystals. However, the plastic crystal is crystallized when the solid electrolyte is stored for a long term at low temperature, resulting in a decrease in ion conductivity.

Patent Document 2 discloses a solid electrolyte comprising a molecular crystal and an inorganic filler, which is excellent in flexibility and ion conductivity by containing them. However, the molecular crystal is a polymerized molecular crystal, and a sufficient plastic crystal structure effect cannot be exerted, accordingly.

SUMMARY

The present disclosure was achieved in light of the above circumstances. An object of the present disclosure is to provide a solid electrolyte material configured to suppress a decrease in ion conductivity.

The present disclosure includes the following embodiments.

<1> A solid electrolyte material comprising a polymer electrolyte, an inorganic filler and succinonitrile, wherein the polymer electrolyte comprises an anionic polymer.

<2> The solid electrolyte material according to the above <1>, wherein the inorganic filler is 1% by mass or more and 10% by mass or less of a total amount of the solid electrolyte material.

<3> The solid electrolyte material according to the above <1> or <2>, wherein the inorganic filler is $SiO_2$.

<4> The solid electrolyte material according to the above <1> or <2>, wherein the inorganic filler is $Al_2O_3$.

<5> The solid electrolyte material according to any one of the above <1> to <4>, wherein the polymer electrolyte comprises at least any one of bis(fluorosulfonyl)imide anion and bis(trifluoromethanesulfonyl)imide anion.

<6> The solid electrolyte material according to any one of the above <1> to <5>, wherein the polymer electrolyte comprises at least any one of poly((trifluoromethane)sulfonimide lithium methacrylate) and poly(styrene-4-sulfonyltrifluoromethylsulfonyl)imide lithium.

<7> A battery comprising a cathode layer, an anode layer and an electrolyte layer,

wherein the anode layer comprises at least any one of elemental Li and a Li alloy as an anode active material;
wherein the electrolyte layer comprises a solid electrolyte and an electrolytic solution; and
wherein the solid electrolyte is the solid electrolyte material defined by any one of the above <1> to <6>.

<8> An all-solid-state battery comprising a cathode layer, an anode layer and a solid electrolyte layer,

wherein the anode layer comprises at least any one of elemental Li and a Li alloy as an anode active material;
wherein the solid electrolyte layer comprises a solid electrolyte; and
wherein the solid electrolyte is the solid electrolyte material defined by any one of the above <1> to <6>.

According to the present disclosure, the following effect is exerted: a solid electrolyte material configured to suppress a decrease in ion conductivity is obtained.

BRIEF DESCRIPTION OF THE DRAWING

FIG. 1 is a schematic cross-sectional view of the battery of the present disclosure.

DETAILED DESCRIPTION

Hereinafter, the embodiments of the present disclosure will be described in detail. Matters that are required to implement the present disclosure (such as common solid electrolyte material structures and production processes not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.

In the present disclosure, unless otherwise noted, the average particle diameter of the particles is the value of a median diameter (D50) which is a particle diameter at an accumulated value of 50% in a volume-based particle size distribution measured by laser diffraction and scattering particle size distribution measurement.

A. Solid electrolyte material

According to the present disclosure, a solid electrolyte material comprising a polymer electrolyte, an inorganic filler and succinonitrile (hereinafter may be referred to as SN), wherein the polymer electrolyte comprises an anionic polymer, is provided.

The solid electrolyte material contains the polymer electrolyte, the inorganic filler and the succinonitrile.

The polymer electrolyte is a substance which is in a solid form at room temperature and in which ion migration is facilitated by applying an electric field from the outside. In the present disclosure, the term "solid" means a substance that can retain its shape independently of the shape of a container.

The weight average molecular weight of the polymer electrolyte is not particularly limited. It may be from 10000 to 200000, or it may be from 50000 to 100000.

The polymer electrolyte contains an anionic polymer.

The anionic polymer is a polymer containing two or more monomer units per molecule, each of which contains an anion group.

The polymer electrolyte may contain, as the anion of the anionic polymer, at least any one of a bis(fluorosulfonyl) imide (FSI) anion and a bis(trifluoromethanesulfonyl)imide (TFSI) anion.

As the anionic polymer, examples include, but are not limited to, polybis(fluorosulfonyl)imide (FSI), polybis(trifluoromethanesulfonyl)imide (TFSI), polyacrylic acid, polymethacrylic acid, an acrylic acid/(meth)acrylic acid alkyl copolymer, a carboxyvinyl polymer, a polystyrene sulfonate and metal salts thereof. As the cation forming the metal salts, examples include, but are not limited to, a sodium ion, a potassium ion, a lithium ion, a magnesium ion and a calcium ion.

The anionic polymer contained in the polymer electrolyte may be at least one selected from the following, for example.

Poly((trifluoromethane)sulfonimide lithium methacrylate) (abbr. PMTFSI-Li) represented by the following chemical formula (1)

Poly(styrene-4-sulfonyltrifluoromethylsulfonyl)imide lithium (abbr. PSTFSI-Li) represented by the following chemical formula (2)

Lithium poly-acrylic acid represented by the following chemical formula (3)

Lithium polystyrene sulfonate represented by the following chemical formula (4)

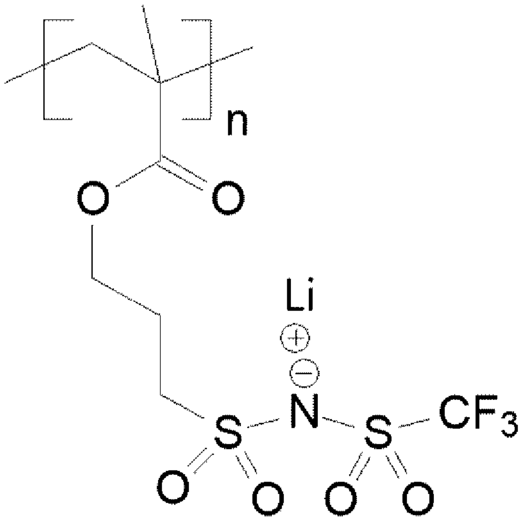

(1) PMTFSI-Li
Poly((trifluoromethane)sulfonimide lithium methacrylate)

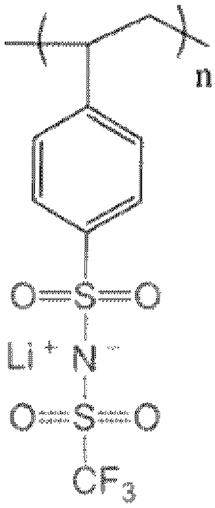

(2) PSTFSI-Li
Poly(styrene-4-sulfonyltrifluoromethylsulfonyl) imide lithium

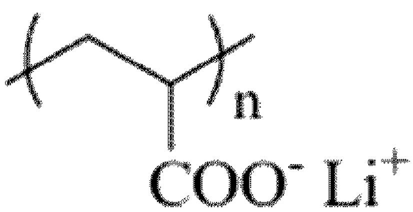

(3) Lithium poly-acrylic acid

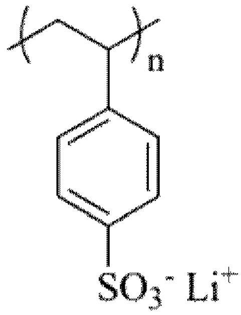

(4) Lithium polystyrene sulfonate

Succinonitrile is a plastic crystal that is present as $NCCH_2CH_2CN$. Its use as a solid solvent can increase the ion conductivity of the polymer electrolyte.

From the viewpoint of increasing the ion conductivity of the polymer electrolyte, the succinonitrile is from 1 mole to 10 moles per mole of the polymer electrolyte, for example. It may be from 2 moles to 4 moles per mole of the polymer electrolyte.

The inorganic filler is used to suppress the crystallization of the succinonitrile.

As the inorganic filler, examples include, but are not limited to, $SiO_2$, $Al_2O_3$, $TiO_2$, $ZrO_2$ and MgO.

The content of the inorganic filler may be 1% by mass or more and 10% by mass or less of the total amount of the solid electrolyte material. When the content is less than 1% by mass, the effect of suppressing the crystallization of the succinonitrile may be insufficient. When the content is more than 0% by mass, the polymer electrolyte may fail to obtain the desired ion conductivity.

The method of measuring the % by mass of the inorganic filler using the solid electrolyte material, may be as follows: the mass of the solid electrolyte material is measured in advance; the solid electrolyte material is dissolved in a polar solvent such as acetonitrile and dimethyl carbonate; only the inorganic filler is extracted therefrom, which is insoluble in the solvent; and the extracted inorganic filler is measured for its mass, thereby obtaining the % by mass of the inorganic filler.

The average particle diameter of the inorganic filler is not particularly limited. For example, it may be from 0.1 μm to 0.2 μm.

In the present disclosure, due to the presence of the inorganic filler, the crystallization of the succinonitrile is suppressed even when the succinonitrile, which is a plastic crystal, is stored for a long time under a low temperature condition; the life of the plastic crystal in a supercooled state is increased; and a decrease in ion conductivity when stored in a low temperature condition, can be suppressed.

B. Battery

The battery of the present disclosure includes a cathode layer, an anode layer and an electrolyte layer. In general, the battery includes a cathode including a cathode layer and an anode including an anode layer.

FIG. 1 is a schematic cross-sectional view of the battery of the present disclosure. A battery 10 shown in FIG. 1 includes a cathode layer 1, an anode layer 2, an electrolyte layer 3 disposed between the cathode layer 1 and the anode layer 2, a cathode collector 4 for collecting electrical current from the cathode layer 1, and an anode collector 5 for collecting electrical current from the anode layer 2. In the present disclosure, the electrolyte layer 3 includes the solid electrolyte material described above under "A. Solid electrolyte material".

According to the present disclosure, such a battery is obtained by use of the above-described solid electrolyte material, that an increase in resistance is small.

[Cathode]

The cathode includes the cathode layer. As needed, it further includes a cathode collector.

The cathode layer is a layer which contains at least a cathode active material. As needed, the cathode layer may contain at least one selected from the group consisting of a solid electrolyte, an electroconductive material and a binder.

As the cathode active material, examples include, but are not limited to, an oxide active material. As the oxide active material, examples include, but are not limited to, a layered rock salt-type active material such as $LiCoO_2$, $LiMnO_2$, $LiNiO_2$, $LiVO_2$ and $LiNi_{1/3}Co_{1/3}Mn_{1/3}O_2$, a spinel-type active material such as $LiMn_2O_4$, $Li_4Ti_5O_{12}$ and $Li(Ni_{0.5}Mn_{1.5})O_4$, and an olivine-type active material such as $LiFePO_4$, $LiMnPO_4$, $LiNiPO_4$ and $LiCoPO_4$.

On the surface of the cathode active material, a coating layer containing a Li ion-conducting compound may be

formed. This is because a reaction between the cathode active material and the solid electrolyte (especially the sulfide solid electrolyte) can be suppressed. As the Li ion-conducting compound, examples include, but are not limited to, $B_2O_3$, $Li_2B_4O_7$, $LiBPO_4$, $Li_3PO_4$, $LiPO_3$ and $LiNbO_3$. The thickness of the coating layer is 1 nm or more and 30 nm or less, for example. The coating layer containing the Li ion-conducting compound covers 70% or more of the cathode active material surface, for example. The coating layer may cover 90% or more of the cathode active material surface, or it may cover 100% of the cathode active material surface. The method for covering the cathode active material surface is not particularly limited, and a conventionally-known method may be appropriately employed.

The cathode active material is generally in a particulate form. The cathode active material may be primary particles, or it may be secondary particles (aggregated primary particles).

The average particle diameter (D50) of the cathode active material is not particularly limited. The average particle diameter is 0.01 μm or more and 50 μm or less, for example, and it may be 0.5 μm or more and 30 μm or less.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 80% by mass or less, for example. It may be 70% by mass or less, or it may be 60% by mass or less. When the percentage of the cathode active material is too large, the ion conductivity and electron conductivity of the cathode layer may relatively decrease.

The cathode layer may contain a solid electrolyte. By adding the solid electrolyte, the ion conductivity of the cathode layer is increased. The solid electrolyte may be an inorganic solid electrolyte such as a sulfide solid electrolyte, a halide solid electrolyte, an oxide solid electrolyte and a complex hydride solid electrolyte, or it may be an organic solid electrolyte such as a gel electrolyte. The solid electrolyte may be the above-described solid electrolyte material.

The sulfide solid electrolyte is an electrolyte which contains a S element. In general, the sulfide solid electrolyte contains at least a Li element and a S element. The sulfide solid electrolyte may further contain a Me element (Me is at least one selected from the group consisting of P, As, Sb, Si, Ge, Sn, B, Al, Ga and In. Also, the sulfide solid electrolyte may contain a halogen element such as F, Cl, Br and I.

The sulfide solid electrolyte may be a glass-based (amorphous) sulfide solid electrolyte, may be a glass-ceramic-based sulfide solid electrolyte, or may be a crystal-based sulfide solid electrolyte. The sulfide solid electrolyte may have a crystal phase. As the crystal phase, examples include, but are not limited to, a Thio-LISICON-type crystal phase, an argyrodite-type crystal phase and a LGPS-type crystal phase.

The composition of the sulfide solid electrolyte is not particularly limited. As the composition, examples include, but are not limited to, $xLi_2S\cdot(1-x)P_2S_5$ (where $0.5 \leq x < 1$) and $yLiI\cdot zLiBr\cdot(100-y-z)(xLi_2S\cdot(1-x)P_2S_5)$ (where $0.5 \leq x < 1$, $0 \leq y \leq 30$ and $0 \leq z \leq 30$). In these compositions, x may satisfy $0.7 \leq x \leq 0.8$. Another example of the composition of the sulfide solid electrolyte is $Li_{7-x}PS_{6-x}X_x$ (where X is at least one selected from the group consisting of F, Cl, Br and I, and x satisfies $0 \leq x < 2$). Another example of the composition of the sulfide solid electrolyte is $Li_{4-x}Me_{1-x}P_xS_4$ (where $0 < x < 1$ and Me is at least one selected from the group consisting of Al, Zn, In, Ge, Si, Sn, Sb, Ga and Bi). As the sulfide solid electrolyte, examples include, but are not limited to, $LiI-LiBr-Li_2S-P_2S_5$, $LiI-Li_2S-P_2S_5$, $LiI-Li_2S-P_2O_5$ and $LiI-Li_3PO_4-P_2S_5$.

As the oxide solid electrolyte, examples include, but are not limited to, a substance having a garnet-type crystal structure containing a Li element, La element, an A element (A is at least one selected from the group consisting of Zr, Nb, Ta and Al) and an O element. For example, the oxide solid electrolyte may be $Li_2O-B_2O_3-P_2O_5$, $Li_2O-SiO_2$, $Li_2O-B_2O_3$, $Li_{1.3}Al_{0.3}Ti_{0.7}(PO_4)_3$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$, $Li_4SiO_4$, $Li_3PO_4$, $Li_{3+x}PO_{4-x}N_x$ (where $1 \leq x \leq 3$) or the like.

For example, the halide solid electrolyte may be a solid electrolyte containing Li, M and X (M is at least one selected from the group consisting of Ti, Al and Y, and X is F, Cl or Br) .

The form of the solid electrolyte may be a particulate form, from the viewpoint of good handleability.

The average particle diameter (D50) of the solid electrolyte particles is not particularly limited. It may be from 1 nm to 100 μm.

The percentage of the solid electrolyte in the cathode layer is 10% by mass or more, for example. The percentage of the solid electrolyte may be 20% by mass or more, or it may be 30% by mass or more. When the percentage of the solid electrolyte is too small, the cathode layer may have a shortage of ion conducting paths. On the other hand, the percentage of the solid electrolyte in the cathode layer is 60% by mass or less, for example, and it may be 50% by mass or less. When the percentage of the solid electrolyte is too large, the percentage of the cathode active material is relatively small, and a low energy density may be obtained.

The cathode layer may contain an electroconductive material. The electron conductivity of the cathode layer is increased by adding the electroconductive material. As the electroconductive material, examples include, but are not limited to, a carbonaceous material, metal particles and an electroconductive polymer. As the carbonaceous material, examples include, but are not limited to, a particulate carbonaceous material such as Acetylene Black (AB) and Ketjen Black (KB) and a fibrous carbonaceous material such as vapor-grown carbon fibers (VGCF), carbon nanotubes (CNT) and carbon nanofibers (CNF).

The percentage of the electroconductive material in the cathode layer is 0.1% by mass or more, for example. The percentage of the electroconductive material may be 0.5% by mass or more, or it may be 1.0% by mass or more. When the percentage of the electroconductive material is too small, the cathode layer may have a shortage of ion conducting paths. On the other hand, the percentage of the electroconductive material in the cathode layer is 5% by mass or less, for example, and it may be 3% by mass or less. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), acrylonitrile-butadiene rubber (NBR), butadiene rubber (BR), polyvinylidene fluoride (PVDF), polytetrafluoroethylene (PTFE), a styrene-isoprene-styrene block copolymer (SIS) and an ethylene-propylene-diene copolymer (EPDM) .

The percentage of the binder in the cathode layer may be 0.5% by mass or more, for example. The percentage of the binder may be 1.0% by mass or more, or it may be 1.5% by mass or more. When the percentage of the binder is too small, there is a possibility that an increase in resistance which is due to charging and discharging cannot be sufficiently reduced. On the other hand, the percentage of the binder in the cathode layer is 5% by mass or less, for example, and it may be 3% by mass or less. When the percentage of the binder is too large, the percentage of the cathode active material is relatively small, and a low energy density may be obtained.

The thickness of the cathode layer is 0.1 μm or more and 1000 μm or less, for example. The thickness of the cathode layer may be 1 μm or more and 500 μm or less, or it may be 30 μm or more and 100 μm or less.

The method for producing the cathode layer is not particularly limited. For example, the production method may be a method including the steps of obtaining a cathode slurry by mixing the cathode active material, the solid electrolyte and a solvent, applying the cathode slurry to a cathode collector and drying the applied slurry, thereby forming the cathode layer. To form the cathode layer, a press treatment (pressing the cathode layer in the thickness direction) may be performed. As the press treatment, examples include, but are not limited to, roller press and plate press.

As the solvent, examples include, but are not limited to, tetralin, diisobutyl ketone, butyl butyrate, mesitylene, heptane, dibutyl ether, decane, dodecane, isodecane and toluene. The solvent component may contain two or more of the components.

As the material for the cathode collector, examples include, but are not limited to, SUS, Cr, Au, Pt, Zn, aluminum, copper, nickel, iron, titanium and carbon. The thickness of the cathode collector is 0.1 μm or more and 100 μm or less, for example. The form of the cathode collector may be a foil form, a plat form or the like. The plan view shape of the cathode collector is not particularly limited. As the shape, examples include, but are not limited to, a circular shape, an elliptical shape, a rectangular shape and a desired polygonal shape. The structure of the cathode collector may be such that a buffer layer, an elastic layer or a positive temperature coefficient (PTC) thermistor layer is disposed on the surface.

[Anode]

The anode includes the anode layer. As needed, it further includes an anode collector.

The anode layer is a layer including at least an anode active material. As needed, the anode layer may include at least one selected from the group consisting of a solid electrolyte, an electroconductive material and a binder.

The anode layer comprises at least any one of elemental Li and a Li alloy as an anode active material. The Li alloy contains a metal element other than lithium, such as Mg, Ag, In, Sn, Si, Ga, Au and Pt.

As the solid electrolyte, electroconductive material and binder used in the anode layer, examples include, but are not limited to, those exemplified above as the solid electrolyte, electroconductive material and binder used in the cathode layer.

As the material for the anode collector, examples include, but are not limited to, SUS, aluminum, copper, nickel, iron, titanium and carbon. The thickness of the anode collector varies depending on the shape. For example, the thickness may be in a range of from 1 μm to 50 μm. The form of the anode collector may be a foil form, a plate form or the like. The plan view shape of the anode collector is not particularly limited. As the shape, examples include, but are not limited to, a circular shape, an elliptical shape, a rectangular shape and a desired polygonal shape. The structure of the anode collector may be such that a buffer layer, an elastic layer or a PTC thermistor layer is disposed on the surface.

[Electrolyte layer]

The electrolyte layer is a layer formed between the cathode layer and the anode layer, and it contains at least an electrolyte. The electrolyte may be a solid electrolyte or a liquid electrolyte (an electrolytic solution).

The electrolyte layer may contain a solid electrolyte and an electrolytic solution.

The solid electrolyte is the solid electrolyte material described above under "A. Solid electrolyte material".

The content of the solid electrolyte in the electrolyte layer is not particularly limited, and it is 50% by mass or more, for example. It may be in a range of 60% by mass or more and 100% by mass or less; it may be in a range of 70% by mass or

more and 100% by mass or less; and it may be 100% by mass. With respect to the total amount of the electrolyte layer, the content of the electrolytic solution may be less than 10% by mass.

An increase in ion conductivity may be obtained when the electrolyte layer contains the electrolytic solution. To avoid a decrease in mechanical strength at high temperature, the content of the electrolytic solution may be less than 10% by mass, may be 5% by mass or less, may be 1% by mass or less, or may be 0.5% by mass or less, for example.

As the electrolytic solution, an aqueous electrolytic solution, a non-aqueous electrolytic solution or the like can be used. They may be used alone or in combination of two or more kinds.

The solvent of the aqueous electrolytic solution contains water as a main component. That is, the whole amount of the solvent (a liquid component) constituting the electrolytic solution is determined as a reference (100% by mole), the water may account for 50% by mole or more, 70% by mole or more, or 90% by mole or more. On the other hand, the upper limit of the proportion of the water in the solvent is not particularly limited.

Although the solvent contains water as the main component, it may contain a solvent other than water. As the solvent other than water, examples include, but are not limited to, one or more selected from the group consisting of an ether, a carbonate, a nitrile, an alcohol, a ketone, an amine, an amide, a sulfur compound and a hydrocarbon. When the whole amount of the solvent (the liquid component) constituting the electrolytic solution is determined as a reference (100% by mole), the solvent other than water may be 50% by mole or less, may be 30% by mole or less, or may be 10% by mole or less.

The aqueous electrolytic solution used in the disclosed embodiments contains an electrolyte. The electrolyte for the aqueous electrolytic solution may be selected from conventionally known electrolytes. As the electrolyte, examples include, but are not limited to, lithium salt, nitrate salt, acetate salt and sulfate salt of imidic acid compounds. More specifically, examples include, but are not limited to, lithium bis(fluorosulfonyl)imide (LiFSI), lithium bis(trifluoromethanesulfonyl)imide (LiTFSI), lithium bis(pentafluoroethanesulfonyl)imide (LiBETI), lithium bis(nonafluorobutanesulfonyl) imide, lithium nonafluoro-N-[(trifluoromethane)sulfonyl]butanesulfonylamide, lithium N,N-hexafluoro-1,3-disulfonylimide, $CH_3COOLi$, $LiPF_6$, $LiBF_4$, $Li_2SO_4$ and $LiNO_3$.

The concentration of the electrolyte in the aqueous electrolytic solution can be appropriately determined depending on the properties of the desired battery, as long as the concentration does not exceed the saturation concentration of the electrolyte with respect to the solvent. This is because, when the electrolyte remains in a solid form in the aqueous electrolytic solution, the solid electrolyte may interfere with battery reaction.

For example, in the case of using LiTFSI as the electrolyte, the amount of the LiTFSI contained in the aqueous electrolytic solution may be 1 mole or more, 5 moles or more, or 7.5 moles or more per kg of the water. The upper limit of the amount is not particularly limited, and it may be 25 moles or less, for example.

As the non-aqueous electrolytic solution, one containing a lithium salt and a non-aqueous solvent is generally used.

As the lithium salt, examples include, but are not limited to, inorganic lithium salts such as $LiPF_6$, $LiBF_4$, $LiClO_4$ and $LiAsF_6$, and organic lithium salts such as $LiCF_3SO_3$, $LiN(SO_2CF_3)_2$(Li-TFSI), $LiN(SO_2C_2F_5)_2$ and $LiC(SO_2CF_3)_3$.

As the non-aqueous solvent, examples include, but are not limited to, ethylene carbonate (EC), propylene carbonate (PC), butylene carbonate (BC), dimethyl carbonate (DMC), diethyl carbonate (DEC), ethyl methyl carbonate (EMC), $\gamma$-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. From the viewpoint of obtaining high dielectric constant and low viscosity, the non-aqueous solvent may be a mixture of a cyclic carbonate compound having high dielectric constant and high viscosity (such as EC, PC and BC) and a chain carbonate compound having low dielectric constant and low viscosity (such as DMC, DEC and EMC), or it may be a mixture of EC and DEC.

The concentration of the lithium salt in the non-aqueous electrolytic solution may be from 0.3 M to 5 M, for example.

As the electrolyte layer, a separator which is impregnated with an electrolyte such as the above-mentioned aqueous electrolytic solution and which prevents contact between the cathode layer and the anode layer, may be used.

The material for the separator is not particularly limited, as long as it is a porous film. As the material, examples include, but are not limited to, resins such as polyethylene (PE), polypropylene (PP), polyester, polyvinyl alcohol, cellulose and polyamide. Of them, the material for the separator may be polyethylene or polypropylene. The separator may have a single-layered structure or a multi-layered structure. As the separator having a multi-layered structure, examples include, but are not limited to, a separator having a two-layered structure such as PE/PP, and a separator having a three-layered structure such as PP/PE/PP and PE/PP/PE.

The separator may be a non-woven fabric such as a resin non-woven fabric or a glass fiber non-woven fabric.

[Solid electrolyte layer]

The electrolyte layer may be a solid electrolyte layer composed of a solid.

When the electrolyte layer is the solid electrolyte layer, the solid electrolyte layer contains a solid electrolyte. As needed, it contains a binder and so on.

As the solid electrolyte, the solid electrolyte layer contains the solid electrolyte material described above under "A. Solid electrolyte material".

The solid electrolyte may be one kind of solid electrolyte, or it may be two or more kinds of solid electrolytes. In the case of using two or more kinds of solid electrolytes, they may be mixed together, or they may be formed into layers to obtain a multilayer structure.

The amount of the solid electrolyte in the solid electrolyte layer is not particularly limited. For example, it may be 50% by mass or more; it may be in a range of 60% by mass or more and 100% by mass or less; it may be in a range of 70% by mass or more and 100% by mass or less; or it may be 100% by mass. The electrolytic solution contained in the solid electrolyte layer may be less than 1% by mass with respect to the total amount of the solid electrolyte layer.

As the binder, examples include, but are not limited to, a binder that can be incorporated in the above-described cathode layer.

The content of the binder in the solid electrolyte layer may be from 0% by mass to 10% by mass with respect to the total amount of the solid electrolyte layer.

The thickness of the electrolyte layer is 0.1 μm or more and 1000 μm or less, for example. The thickness of the electrolyte layer may be 0.1 μm or more and 500 μm or less, or it may be 0.1 μm or more and 100 μm or less.

In the present disclosure, the battery may further include a fixing jig for applying a fixing pressure to the cathode layer, the electrolyte layer and the anode layer along the thickness direction. Especially when the electrolyte layer is the solid electrolyte layer, the fixing pressure may be applied for the formation of good ion conducting paths and electron conducting paths. The fixing pressure is 0.1 MPa or more, for example. The fixing pressure may be 1 MPa or more, or it may be 5 MPa or more. On the other hand, the fixing pressure is 100 MPa or less, for example. The fixing pressure may be 50 MPa or less, or it may be 20 MPa or less.

[Battery]

In the present disclosure, the type of the battery is not particularly limited. The battery of the present disclosure is typically a lithium ion battery. Also in the present disclosure, the battery may be a liquid battery in which the electrolyte layer contains an electrolytic solution, or it may be a solid-state battery in which the electrolyte layer contains a solid electrolyte. The solid-state battery may be a semi-solid battery or an all-solid-state battery. In the present disclosure, the semi-solid battery is a battery in which the electrolyte layer contains an inorganic solid electrolyte or a liquid component (e.g., a solvent and an electrolytic solution). In the present disclosure, the all-solid-state battery is a battery in which the electrolyte layer contains, as the electrolyte, an inorganic solid electrolyte only. In the present disclosure, the battery may be a primary battery or a secondary battery. Among them, the solid-state battery may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

As the applications of the battery, examples include, but are not limited to, the power sources of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used in the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as an information processing device.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

EXAMPLES

[Examples 1 to 3]

(Production of solid electrolyte material)

<PMTFSI-Li + SN + $SiO_2$>

In an Ar atmosphere glove box, succinonitrile (SN) and, as an electrolyte polymer, PMTFSI-Li (manufactured by Polykey Polymers, S.L., Spain) were weighed in a molar ratio of 4:1. They were stirred in acetonitrile (manufactured by

Sigma-Aldrich Corporation) for 24 hours to be dissolved. To a solution thus obtained, $SiO_2$ (manufactured by Sigma-Aldrich Corporation, average particle diameter 0.1 μm to 0.2 μm) was added as an inorganic filler so that the filler amount was 1% by mass (Example 1), 5% by mass (Example 2) and 10% by mass (Example 3) with respect to the total amount of the obtained solid electrolyte material. The mixed solution was stirred for 12 hours and then left to stand on a hot plate at 50°C to volatilize the acetonitrile. Then, a product thus obtained was dried in vacuum at 50°C for 6 hours, thereby obtaining a solid electrolyte material.

[Comparative Example 1]

<PMTFSI-Li + SN>

A solid electrolyte material was obtained in the same manner as Example 1, except that the inorganic filler was not added in the production of the solid electrolyte material.

[Example 4]

<PMTFSI-Li + SN + $Al_2O_3$>

A solid electrolyte material was obtained in the same manner as Example 1, except that in the production of the solid electrolyte material, instead of the $SiO_2$, $Al_2O_3$ (manufactured by Sigma-Aldrich Corporation, average particle diameter 0.1 μm to 0.2 μm) was added as the inorganic filler so that the filler amount was 5% by mass with respect to the total amount of the obtained solid electrolyte material.

[Example 5]

<PSTFSI-Li + SN + $SiO_2$>

A solid electrolyte material was obtained in the same manner as Example 1, except that in the production of the solid electrolyte material, instead of the PMTFSI-Li, PSTFSI-Li was used as the polymer electrolyte, and $SiO_2$ (manufactured by Sigma-Aldrich Corporation, average particle diameter 0.1 μm to 0.2 μm) was added as the inorganic filler so that the filler amount was 5% by mass with respect to the total amount of the obtained solid electrolyte material.

(Ion conductivity measurement)

A cell was produced by encapsulating, inside the Ar glove box, the solid electrolyte material obtained in Example 1 in a glass cell which was equipped with a platinum electrode and which had a known cell constant.

The produced cell was left to stand for two hours in a thermostat bath at 70°C. Then, the cell temperature was decreased to 25°C. The AC impedance of the cell was measured in the following conditions: an applied voltage of 10 mV and an AC frequency of from 1 Hz to 1 MHz. From the impedance result, the ion conductivity of the solid electrolyte material was calculated and determined as the initial ion conductivity.

The cell was further left to stand for 30 days in a thermostat bath at 25°C. Then, the AC impedance of the cell was measured again in the conditions of an applied voltage of 10 mV and an AC frequency of form 1 Hz to 1 MHz. From the impedance result, the ion conductivity of the solid electrolyte material was calculated and determined as the ion conductivity after 30 days.

The ion conductivity retention rate of the solid electrolyte material was calculated by the following formula using the ratio of the ion conductivity after 30 days and the initial ion conductivity. The result is shown in Table 1.

$$\text{Ion conductivity retention rate (\%)} = (\text{Ion conductivity after 30 days} / \text{Initial ion conductivity}) \times 100$$

In the same manner as above, cells were produced by use of the solid electrolyte materials obtained in Examples 2 to 5 and Comparative Example 1, and their ion conductivity retention rates were calculated. The results are shown in Table 1.

Table 1

| | Initial ion conductivity (S/cm) | Ion conductivity (S/cm) after 30 days | Ion conductivity retention rate (%) |
|---|---|---|---|
| Comparative Example 1 | $8.2 \times 10^{-5}$ | $2.0 \times 10^{-6}$ | 2.40 |
| Example 1 | $8.4 \times 10^{-5}$ | $7.3 \times 10^{-5}$ | 86.90 |
| Example 2 | $7.8 \times 10^{-5}$ | $7.4 \times 10^{-5}$ | 94.80 |
| Example 3 | $6.4 \times 10^{-5}$ | $6.1 \times 10^{-5}$ | 95.30 |
| Example 4 | $8.0 \times 10^{-5}$ | $7.0 \times 10^{-5}$ | 87.50 |
| Example 5 | $7.2 \times 10^{-5}$ | $6.7 \times 10^{-5}$ | 92.40 |

It is revealed that the ion conductivity retention rates after 30 days of Examples 1 to 5 in each of which the inorganic filler was added, are higher than the ion conductivity retention rate after 30 days of Comparative Example 1 in which the inorganic filler was not added.

According to the present disclosure, therefore, a decrease in the ion conductivity of the solid electrolyte material is suppressed even when the solid electrolyte material is stored for as long as 30 days in a low temperature environment of 25°C.

REFERENCE SIGNS LIST

1. Cathode layer
2. Anode layer
3. Electrolyte layer
4. Cathode collector
5. Anode collector
10. Battery

**Claims**

**1.** A solid electrolyte material comprising a polymer electrolyte, an inorganic filler and succinonitrile, wherein the polymer electrolyte comprises an anionic polymer.

**2.** The solid electrolyte material according to Claim 1, wherein the inorganic filler is 1% by mass or more and 10% by mass or less of a total amount of the solid electrolyte material.

**3.** The solid electrolyte material according to Claim 1, wherein the inorganic filler is $SiO_2$.

**4.** The solid electrolyte material according to Claim 1, wherein the inorganic filler is $Al_2O_3$.

**5.** The solid electrolyte material according to Claim 1, wherein the polymer electrolyte comprises at least any one of bis (fluorosulfonyl) imide anion and bis(trifluoromethanesulfonyl)imide anion.

**6.** The solid electrolyte material according to Claim 1, wherein the polymer electrolyte comprises at least any one of poly((trifluoromethane)sulfonimide lithium methacrylate) and poly(styrene-4-sulfonyltrifluoromethylsulfonyl)imide lithium.

**7.** A battery comprising a cathode layer, an anode layer and an electrolyte layer,

wherein the anode layer comprises at least any one of elemental Li and a Li alloy as an anode active material;
wherein the electrolyte layer comprises a solid electrolyte and an electrolytic solution; and
wherein the solid electrolyte is the solid electrolyte material defined by any one of Claims 1 to 6.

**8.** An all-solid-state battery comprising a cathode layer, an anode layer and a solid electrolyte layer,

wherein the anode layer comprises at least any one of elemental Li and a Li alloy as an anode active material;
wherein the solid electrolyte layer comprises a solid electrolyte; and
wherein the solid electrolyte is the solid electrolyte material defined by any one of Claims 1 to 6.

FIG. 1

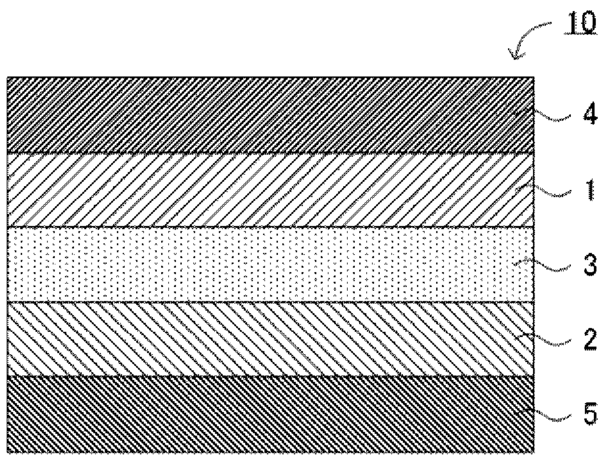

Europäisches Patentamt
European Patent Office
Office européen des brevets

# EUROPEAN SEARCH REPORT

Application Number
EP 25 19 7825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/013086 A1 (BLUE SOLUTIONS [FR]) 18 January 2024 (2024-01-18)<br>* page 3, line 15 - page 5, line 20 *<br>* page 5, line 29 - page 6, line 2 *<br>* page 6, line 29 - page 7, line 8 *<br>* page 9, lines 12-21 *<br>* page 10, lines 9-15 *<br>* page 16, lines 4-10 *<br>* page 19, lines 9-15 *<br>* page 21, lines 5-9 *<br>* page 21, line 19 - page 22, line 10 *<br>* page 31, line 22 - page 34, line 9 *<br>----- | 1,3-8 | INV.<br>H01M4/38<br>H01M4/40<br>H01M10/052<br>H01M10/056<br>H01M10/0562<br>H01M10/0565 |
| X | KR 2023 0044092 A (KOREA RES INST CHEMICAL TECH [KR]) 3 April 2023 (2023-04-03)<br>* paragraph [0002] *<br>* paragraph [0008] *<br>* paragraph [0010] - paragraph [0011] *<br>* paragraph [0013] *<br>* paragraph [0028] - paragraph [0040] *<br>* paragraph [0088] *<br>* paragraph [0090] *<br>* paragraph [0122] *<br>* paragraph [0096] *<br>----- | 1-5,7,8 | TECHNICAL FIELDS SEARCHED (IPC)<br>H01M |
| Y | US 2014/272600 A1 (BOUCHET RENAUD [FR] ET AL) 18 September 2014 (2014-09-18)<br>* paragraph [0001] *<br>* paragraph [0015] *<br>* paragraph [0026] *<br>* paragraph [0049] *<br>* paragraph [0066] - paragraph [0110] *<br>-----<br>-/-- | 1-8 | |

The present search report has been drawn up for all claims

1

| Place of search | Date of completion of the search | Examiner |
|---|---|---|
| The Hague | 22 January 2026 | Crottaz, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 19 7825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2021 0101850 A (POSTECH RES & BUSINESS DEV FOUND [KR]) 19 August 2021 (2021-08-19) * paragraph [0019] - paragraph [0025] * * paragraph [0028] - paragraph [0031] * * paragraph [0038] - paragraph [0046] * * paragraph [0052] * * paragraph [0076] * ----- | 1-8 | |
| Y | US 2024/250302 A1 (BOCHAROVA VERA [US] ET AL) 25 July 2024 (2024-07-25) * paragraph [0006] - paragraph [0010] * * paragraph [0018] - paragraph [0021] * * paragraph [0039] * * paragraph [0041] * * paragraph [0067] * ----- | 1-8 | |
| Y | WO 2015/184597 A1 (DOW GLOBAL TECHNOLOGIES LLC [US]; LI YANG [CN] ET AL.) 10 December 2015 (2015-12-10) * paragraph [0001] * * paragraph [0006] - paragraph [0023] * * paragraphs [0026] - [0031] * ----- | 1-8 | TECHNICAL FIELDS SEARCHED (IPC) |

The present search report has been drawn up for all claims

1

| Place of search | Date of completion of the search | Examiner |
|---|---|---|
| The Hague | 22 January 2026 | Crottaz, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 7825

This annex lists the patent family members relating to the patent documents cited in the above-mentioned European search report. The members are as contained in the European Patent Office EDP file on The European Patent Office is in no way liable for these particulars which are merely given for the purpose of information.

22-01-2026

| Patent document cited in search report | Publication date | Patent family member(s) | Publication date |
|---|---|---|---|
| WO 2024013086 A1 | 18-01-2024 | CA 3261172 A1 | 18-01-2024 |
| | | CN 119452051 A | 14-02-2025 |
| | | EP 4555027 A1 | 21-05-2025 |
| | | FR 3137683 A1 | 12-01-2024 |
| | | JP 2025522988 A | 17-07-2025 |
| | | KR 20250034395 A | 11-03-2025 |
| | | WO 2024013086 A1 | 18-01-2024 |
| KR 20230044092 A | 03-04-2023 | KR 20230044092 A | 03-04-2023 |
| | | WO 2023048440 A1 | 30-03-2023 |
| US 2014272600 A1 | 18-09-2014 | CA 2846267 A1 | 14-03-2013 |
| | | CN 103874724 A | 18-06-2014 |
| | | EP 2753656 A1 | 16-07-2014 |
| | | ES 2560406 T3 | 18-02-2016 |
| | | FR 2979630 A1 | 08-03-2013 |
| | | JP 6243842 B2 | 06-12-2017 |
| | | JP 2014529863 A | 13-11-2014 |
| | | KR 20140061501 A | 21-05-2014 |
| | | US 2014272600 A1 | 18-09-2014 |
| | | WO 2013034848 A1 | 14-03-2013 |
| KR 20210101850 A | 19-08-2021 | NONE | |
| US 2024250302 A1 | 25-07-2024 | NONE | |
| WO 2015184597 A1 | 10-12-2015 | CN 106459392 A | 22-02-2017 |
| | | US 2017084950 A1 | 23-03-2017 |
| | | WO 2015184597 A1 | 10-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017091813 A
- WO 2021166975 A
- WO 2022102767 A